# EUROPÄISCHE PATENTANMELDUNG

(11) **EP 1 691 259 A1**
(43) Veröffentlichungstag der Anmeldung: **16.08.2006**
(21) Anmeldenummer: 05002710.1
(22) Anmeldetag: 09.02.2005
(51) Int. Cl.: G06F 3/03

(54) **Automatische Eingabehilfe in Computerprogrammen**

(71) Anmelder: SIEMENS AKTIENGESELLSCHAFT, 80333 München (DE)
(72) Erfinder: Windl, Helmut, 93077 Bad Abbach (DE)

(57) **Zusammenfassung**

Die Erfindung betrifft ein Verfahren, ein Computerprogrammprodukt und ein System zur Bereitstellung von Benutzerinformationen auf einem Bildschirm zu von einem Anwender editierbaren Eingabefeldern. Um die Benutzerinformationen für den Anwender schnell und einfach zugänglich zu machen, werden folgende Verfahrenschritte vorgeschlagen:
- Erkennen eines innerhalb eines Eingabefeldes (2) positionierten Cursors (3) und
- Automatisches Anzeigen eines Bildschirmfensters (1) mit den Benutzerinformationen unmittelbar nach dem Erkennen des innerhalb des Eingabefeldes positionierten Cursors (3).

## Beschreibung

Die Erfindung betrifft ein Verfahren, ein Computerprogrammprodukt und ein System zur Bereitstellung von Benutzerinformationen auf einem Bildschirm zu von einem Anwender editierbaren Eingabefeldern.

Die Erfindung kommt zum Beispiel innerhalb von Softwareprogrammen zum Einsatz, bei denen von einem Anwender Eingabefelder zu editieren sind und der Anwender zum korrekten Befüllen der Felder zusätzliche Informationen benötigt.

Insbesondere in komplexen Entwicklungsumgebungen müssen häufig bestimmten Parametern über entsprechende Eingabefelder Werte zugewiesen werden. Für Anwender, die eine derartige Entwicklungsumgebung nur selten oder gar erstmalig verwenden ist daher u. U. eine Hilfefunktion notwendig, die dem Anwender Informationen über den Sinn und Zweck eines Parameters oder dessen gültigen Wertebereich zur Verfügung stellt.

Heutige Softwareapplikationen bieten daher in der Regel ein Hilfesystem an. Im Bedarfsfall verlässt der Anwender seine Eingabemaske, sucht die benötigten Informationen im Hilfesystem und kehrt anschließend wieder in die Eingabemaske zurück. Bei einer fehlerhaften Eingabe des Anwenders wird meist eine Dialogbox geöffnet, die den Fehler meldet und von dem Anwender beispielsweise per Mausklick geschlossen werden muss.

Der Erfindung liegt die Aufgabe zu Grunde, innerhalb eines Computerprogramms Benutzerinformationen zu editierbaren Eingabefeldern für einen Anwender schnell und einfach zugänglich zu machen.

Diese Aufgabe wird durch ein Verfahren gelöst zur Bereitstellung von Benutzerinformationen auf einem Bildschirm zu innerhalb eines Computerprogramms von einem Anwender editierbaren Eingabefeldern mit folgenden Verfahrensschritten:
- Erkennen eines innerhalb eines Eingabefeldes positionierten Cursors und
- Automatisches Anzeigen eines Bildschirmfensters mit den Benutzerinformationen unmittelbar nach dem Erkennen des innerhalb des Eingabefeldes positionierten Cursors.

Diese Aufgabe wird weiterhin von einem Computerprogrammprodukt zur Durchführung eines derartigen Verfahrens gelöst.

Ferner wird diese Aufgabe durch ein System zur Bereitstellung von Benutzerinformationen mit
- einem Bildschirm zur Darstellung innerhalb eines Computerprogramms von einem Anwender editierbarer Eingabefelder und
- einer Verarbeitungseinheit zum Erkennen eines innerhalb eines Eingabefeldes positionierten Cursors und zum Erzeugen eines Bildschirmfensters mit den Benutzerinformationen unmittelbar nach dem Erkennen des innerhalb des Eingabefeldes positionierten Cursors,
wobei der Bildschirm zum Anzeigen des Bildschirmfensters vorgesehen ist.

Der Erfindung liegt die Erkenntnis zu Grunde, dass insbesondere bei komplexen Anwendungen Informationen zu einem Eingabefeld für den Anwender unmittelbar bei der Editierung verfügbar sein sollten. Erfindungsgemäß wird dies dadurch gewährleistet, dass das Bildschirmfenster, welches diese Informationen enthält, geöffnet wird, sobald sich der Cursor in dem Eingabefeld befindet. Unter dem Begriff Cursor ist hier sowie in der gesamten vorliegenden Schrift jegliche Art im Softwarebereich gängiger Eingabezeiger zu verstehen. Die Position des Cursors innerhalb des Eingabefeldes signalisiert eindeutig einen Wunsch des Anwenders, das Eingabefeld in irgendeiner Weise zu belegen. Wird hierzu eine Hilfestellung benötigt, so muss der Anwender nicht erst seine Eingabemaske verlassen um eine Hilfefunktion zu starten, dort die geeigneten Informationen suchen und anschließend wieder in die Eingabemaske zurückkehren. Stattdessen steht die benötigte Information schon in der von ihm zu bearbeitenden Benutzeroberfläche direkt zur Verfügung, so dass sein Arbeitsfluss durch das Beschaffen der benötigten Informationen nicht unterbrochen wird.

Die beschriebene Vorgehensweise zur Bereitstellung der Informationen ist insbesondere in vielen komplexen Computeranwendungen anwendbar, bei denen das Eingabefeld zur Belegung eines Parameters mit einem Wert vorgesehen ist und der Anwender durch die Benutzerinformationen über einen Zweck und/oder einen gültigen Wertebereich des Parameters informiert wird. Z. B. bei der Belegung eines Parameters eines technischen Systems ist es einem Anwender, der das entsprechende Programm erstmalig oder nur selten benutzt oft unklar, welchen Einfluss dieser Parameter auf das technische System hat und welche Werte für den Parameter zulässig sind. Diese Informationen werden dem Anwender in dieser Ausführungsform zur Verfügung gestellt, sobald der Wunsch des Anwenders, den Wert zu belegen, erkannt wird.

Oftmals ist es schwierig, sämtliche Informationen, die zu einem Eingabefeld benötigt werden, innerhalb des Bildschirmfensters darzustellen. In diesen Fällen ist es zweckmäßig, wenn in dem Bildschirmfenster ein Hyperlink dargestellt wird, der dem Anwender weitere Benutzerinformationen zugänglich macht. Ein derartiger Hyperlink kann auf Dokumente verweisen, die sich außerhalb der Benutzeroberfläche befinden.

Je nach Komplexität des zu belegenden Eingabefeldes kann der Text, der zur Darstellung der benötigten Benutzerinformationen notwendig ist, ein sehr großes Bildschirmfenster erfordern. Somit besteht die Gefahr, dass das Bildschirmfenster andere Eingabefelder innerhalb der Benutzeroberfläche verdeckt. Daher ist es zweckmäßig, dass das Bildschirmfenster autark dargestellt wird, wenn ein von dem Anwender steuerbarer Mauszeiger innerhalb des Eingabefeldes oder innerhalb eines Aktivierungsbereiches im Bildschirmfenster positioniert ist, in dem mittels des Mauszeigers eine durch das Bildschirmfenster bereitgestellte Funktion, insbesondere der Hyperlink, aktivierbar ist. Hingegen sollte das Bildschirmfenster semitransparent dargestellt werden, wenn der Mauszeiger außerhalb des Eingabefeldes und außerhalb des Aktivierungsbereichs positioniert ist. Solange sich der Mauszeiger innerhalb des Eingabefeldes befindet, darf davon ausgegangen werden, dass der Anwender ausschließlich mit der Editierung des Eingabefeldes beschäftigt ist. Daher benötigt er keine Informationen, die durch das Bildschirmfenster eventuell verdeckt werden. Sobald der Anwender den Mauszeiger in einen Bereich außerhalb des Eingabefeldes bewegt, wird das Bildschirmfenster semitransparent dargestellt, so dass Informationen, die unterhalb des Bildschirmfensters liegen, für den Anwender sichtbar sind. Die beschriebene Semitransparenz des Bildschirmfensters betrifft hierbei nicht nur die Darstellungsweise. Darüber hinaus sind auch Schaltflächen, die unterhalb des Bildschirmfensters liegen, durch den Mauszeiger aktivierbar.

Eine Ausnahme bildet hierbei lediglich der Fall, dass sich innerhalb des Bildschirmfensters ein Aktivierungsbereich, z.B. eine Schaltfläche oder ein Hyperlink, befindet, auf den der Anwender mit dem Mauszeiger Zugriff hat. In einem solchen Fall wird das Bildschirmfenster opak dargestellt, sobald der Anwender den Mauszeiger in einen solchen Aktivierungsbereich bewegt. Durch die opake Darstellung des Bildschirmfensters wird dem Anwender signalisiert, dass er nun in der Lage ist, mit der Maus eine Funktion des Bildschirmfensters zu aktivieren.

In einer besonders vorteilhaften Ausführungsform der Erfindung wird während oder nach einer fehlerhaften Editierung des Eingabefeldes ein weiteres Bildschirmfenster angezeigt, dass eine Fehlermeldung ausgibt. Somit wird der Anwender frühzeitig über einen Eingabefehler informiert. In diesem Zusammenhang ist es besonders zweckmäßig, nach der fehlerhaften Editierung des Eingabefeldes ein Verbleiben des Cursors im Eingabefeld zu einer Korrektur der fehlerhaften Editierung zu erzwingen. Hierdurch wird der Anwender direkt auf die fehlerhafte Eingabe aufmerksam gemacht und kann erst dann mit der Editierung des weiteren Eingabefeldes beginnen, nachdem er das Eingabefeld mit einem korrekten Wert belegt hat.

Eine vorteilhafte Anwendung des Verfahrens ist dadurch gekennzeichnet, dass das Computerprogramm als Entwicklungsumgebung, insbesondere für Steuerungsaufgaben in der Automatisierungstechnik, ausgeführt ist. Bei derartigen Steuerungsaufgaben sind oftmals Parameter eines technischen Systems mit Werten zu belegen, wobei sehr viel Anwenderwissen vorausgesetzt wird. Für die entsprechenden physikalischen Parameter existiert in vielen Fällen nur ein begrenzter zulässiger Wertebereich. Durch die die beschriebene Vorgehensweise wird der Anwender eines solchen Programms frühzeitig über eventuelle Eingabefehler, über einen zulässigen Wertebereich des Parameters und über den Zweck und die Auswirkungen des einzustellenden physikalischen Parameters informiert.

Im Folgenden wird die Erfindung anhand der in den Figuren dargestellten Ausführungsbeispiele näher beschrieben und erläutert. Es zeigen:
- FIG 1: eine Eingabemaske mit einer Ausführung des Verfahrens zur Bereitstellung von Benutzerinformationen,
- FIG 2: eine Eingabemaske mit einer weiteren Ausführung des Verfahrens zur Bereitstellung von Benutzerinformationen,
- FIG 3: eine Eingabemaske mit einer Ausführung des Verfahrens zur Generierung einer Fehlermeldung und
- FIG 4: eine Ausführungsform eines Systems zur Bereitstellung von Benutzerinformationen.

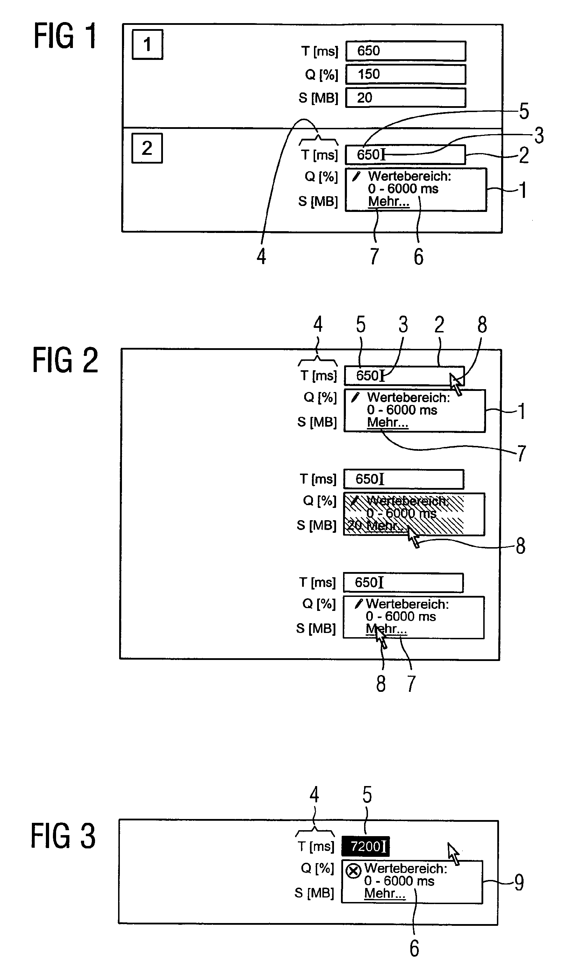

FIG 1 zeigt eine Eingabemaske mit einer Ausführung des Verfahrens zur Bereitstellung von Benutzerinformationen. Die Eingabemaske ist Bestandteil eines Computerprogramms, das beispielsweise in der Automatisierungstechnik Anwendung findet. Die Eingabemaske dient dazu, vorgegebene Systemparameter mit einem Wert zu belegen. Hierzu bewegt ein Anwender einen Mauszeiger in ein Eingabefeld 2. Z.B. durch Betätigen der linken Maustaste innerhalb des Eingabefeldes 2 erscheint ein Eingabecursor 3 im Eingabefeld 2. Sobald der Cursor 3 sich innerhalb des Eingabefeldes 2 befindet, öffnet sich ein Bildschirmfenster 1, in dem Informationen zu dem zu belegenden Parameter 4 angezeigt werden. So wird innerhalb des Bildschirmfensters 1 beispielsweise der gültige Wertebereich 6 der zu belegenden Variable dargestellt. Darüber hinaus befindet sich innerhalb des Bildschirmfensters 1 ein Hyperlink 7, über den weitere Informationen zu dem zu belegenden Parameter 4 zugreifbar sind. Die über den Hyperlink 7 verlinkten Informationen sind zu umfangreich, um innerhalb des Bildschirmfensters 1 dargestellt zu werden.

In dem beschriebenen Verfahren werden dem Anwender Informationen zu dem von ihm zu belegenden Parameter 4 über das Bildschirmfenster 1 zur Verfügung gestellt, ohne dass der Anwender hierzu die Eingabemaske verlassen muss. Somit wird der Anwender nicht in seinem Arbeitsfluss dadurch gestört, dass er eine Hilfefunktion aufrufen muss, innerhalb derer er Informationen zu dem zu belegenden Parameter 4 erhält.

FIG 2 zeigt eine Eingabemaske mit einer weiteren Ausführung des Verfahrens zur Bereitstellung von Benutzerinformationen. Es handelt sich beispielsweise um dieselbe Eingabemaske, die bereits schon in der FIG 1 beschrieben wurde. Auch hier belegt der Anwender einen Parameter 4 mit einem Wert 5, in dem er seinen Mauszeiger 8 in ein Eingabefeld 2 bewegt, einen Cursor 3 positioniert und dort eine entsprechende Eingabe tätigt. Bei der Positionierung des Cursors 3 innerhalb des Eingabefensters 2 wird ein Bildschirmfenster 1 zur Darstellung von Benutzerinformationen über den Parameter 4 angezeigt. Da sich der Mauszeiger 8 innerhalb des Eingabefensters 2 befindet, wird das Bildschirmfenster 1 opak, d.h. undurchsichtig, dargestellt. Eingabefelder, die unterhalb des Bildschirmfensters 1 liegen, sind somit für den Anwender nicht sichtbar.

Wenn der Anwender den Mauszeiger 8 in einen Bereich außerhalb des Eingabefeldes 2 bewegt, wird das Bildschirmfenster 1 semitransparent dargestellt. Auf diese Art und Weise werden Eingabefelder, die sich unterhalb des Bildschirmfensters 1 befinden, für den Anwender sichtbar und mit dem Mauszeiger 8 auch zugreifbar. So könnte der Anwender nun, wie in der Mitte der FIG 2 dargestellt, den Mauszeiger auf ein weiteres Eingabefeld unterhalb des Eingabefeldes 2 bewegen, insbesondere durch Betätigen der linken Maustaste den Cursor in dieses weitere Eingabefeld setzen und somit eine Eingabe innerhalb des weiteren Eingabefensters tätigen, um den entsprechenden Parameter mit einem Wert zu belegen.

Innerhalb des Bildschirmfensters 1 befindet sich ein Hyperlink 7, der mit dem Mauszeiger 8 aktiviert werden kann, um weitere Informationen für den Anwender zugänglich zu machen. Sobald der Anwender den Mauszeiger 8 auf den Hyperlink 7 bewegt, wird das Bildschirmfenster 1 wieder opak dargestellt. Die opake Darstellung des Bildschirmfensters signalisiert dem Anwender, dass der Hyperlink 7 mit Hilfe des Mauszeigers 8 insbesondere durch Betätigen der linken Maustaste aktiviert werden kann.

Die beschriebene Ausführungsform des Verfahrens erlaubt es dem Anwender, den Mauszeiger quasi in drei Dimensionen anzuwenden. Durch die kontextabhängige Darstellung des Bildschirmfensters, ist der Anwender in der Lage, sowohl Schaltflächen innerhalb des Bildschirmfensters 1 zu aktivieren, als auch Schaltflächen unterhalb des Bildschirmfensters 1 zu betätigen. Durch die semitransparente Darstellung des Bildschirmfensters 1 kann der Anwender Eingabefelder unterhalb des Bildschirmfensters 1 sehen und auch mit Werten belegen, ohne hierzu das Bildschirmfenster 1 zunächst umständlich mit dem Mauszeiger 8 beiseite schieben zu müssen.

FIG 3 zeigt eine Eingabemaske mit einer Ausführung des Verfahrens bei Generierung einer Fehlermeldung. In dem dargestellten Beispiel belegt der Anwender einen Parameter 4 mit einem Wert 5, der außerhalb eines zulässigen Wertebereichs 6 des Parameters liegt. Eine derartige fehlerhafte Eingabe wird erkannt und durch Öffnen eines weiteren Bildschirmfensters 9 dem Anwender mitgeteilt. Das weitere Eingabefenster 9 wird geöffnet, sobald die fehlerhafte Eingabe erkannt wird. Dies kann schon während der Eingabe des Wertes 5 oder bei dem Versuch des Anwenders, das Eingabefeld 2 mit dem Mauszeiger zu verlassen, geschehen. Ferner wird erzwungen, dass der Cursor innerhalb des Eingabefeldes 2 solange verweilt, bis der Anwender den Parameter 4 mit einem zulässigen Wert belegt hat. Insbesondere dann, wenn das Verfahren innerhalb eines Computerprogramms Anwendung findet, mit dem ein komplexes technisches Gerät, beispielsweise ein Automatisierungsgerät, gesteuert wird, ist die beschriebene Behandlung einer fehlerhaften Anwendereingabe besonders vorteilhaft. Direkt bei der Eingabe des Wertes 5 wird bereits eine fehlerhafte Eingabe vermieden, die u. U. einen kritischen Zustand eines zu steuernden Automatisierungsprozesses zur Folge hätte.

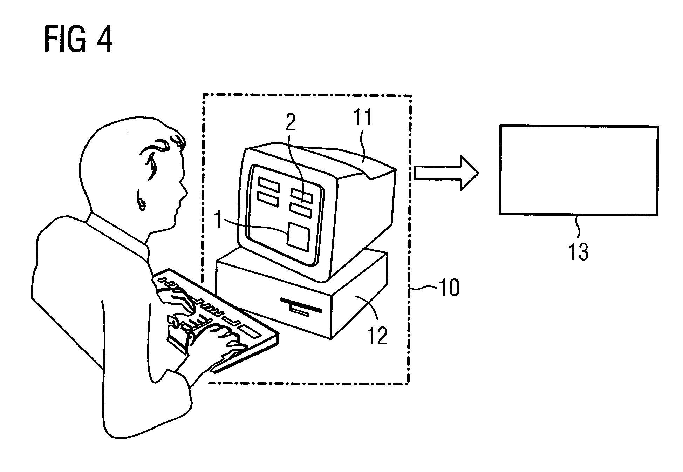

FIG 4 zeigt eine Ausführungsform eines Systems 10 zur Bereitstellung von Benutzerinformationen. Das System 10 umfasst einen Bildschirm 11 und eine Verarbeitungseinheit 12. Das System 10 wird zur Projektierung eines Steuerungsprogramms für ein Automatisierungsgerät 13, beispielsweise eine Speicherprogrammierbare Steuerung (SPS), eingesetzt. Das Steuerungsprogramm wird zunächst auf dem System 10 projektiert und anschließend auf das Automatisierungsgerät 13 geladen.

Auf der Verarbeitungseinheit 12, bei der es sich beispielsweise um einen Personal Computer handeln kann, ist ein Computerprogrammprodukt installiert, mit dem sich ein echtzeitfähiges Steuerungsprogramm generieren lässt. Bei der Erstellung des Steuerungsprogramms, belegt ein Anwender physikalische Parameter über entsprechende Eingabefelder 2 mit Werten. Zu den zu belegenden Parametern werden dem Anwender Benutzerinformationen über ein Bildschirmfenster 1 in der bereits beschriebenen Art und Weise zur Verfügung gestellt. Nachdem der Anwender das Steuerungsprogramm auf dem System 10 erstellt und getestet hat, lädt er das Programm auf das Automatisierungsgerät 13.

## Patentansprüche

1. Verfahren zur Bereitstellung von Benutzerinformationen auf einem Bildschirm zu innerhalb eines Computerprogramms von einem Anwender editierbaren Eingabefeldern mit folgenden Verfahrensschritten:
- Erkennen eines innerhalb eines Eingabefeldes (2) positionierten Cursors (3) und
- Automatisches Anzeigen eines Bildschirmfensters (1) mit den Benutzerinformationen unmittelbar nach dem Erkennen des innerhalb des Eingabefeldes positionierten Cursors (3).

2. Verfahren nach Anspruch 1,
wobei das Eingabefeld zur Belegung eines Parameters (4) mit einem Wert (5) vorgesehen ist und der Anwender durch die Benutzerinformationen über einen Zweck und/oder einen gültigen Wertebereich (6) des Parameters (4) informiert wird.

3. Verfahren nach einem der Ansprüche 1 oder 2,
wobei in dem Bildschirmfenster (1) ein Hyperlink (7) dargestellt wird, der dem Anwender weitere Benutzerinformationen zugänglich macht.

4. Verfahren nach einem der vorhergehenden Ansprüche,
wobei das Bildschirmfenster (1) opak dargestellt wird, wenn ein von dem Anwender steuerbarer Mauszeiger (8) innerhalb des Eingabefeldes (2) oder innerhalb eines Aktivierungsbereiches im Bildschirmfenster (1) positioniert ist, in dem mittels des Mauszeigers (8) eine durch das Bildschirmfenster (1) bereitgestellte Funktion, insbesondere der Hyperlink (7), aktivierbar ist.

5. Verfahren nach einem der vorhergehenden Ansprüche,
wobei das Bildschirmfenster (1) semitransparent dargestellt wird, wenn der Mauszeiger (8) außerhalb des Eingabefeldes (2) und außerhalb des Aktivierungsbereiches positioniert ist.

6. Verfahren nach einem der vorhergehenden Ansprüche,
wobei während oder nach einer fehlerhaften Editierung des Eingabefeldes (2) ein weiteres Bildschirmfenster (9) angezeigt wird, das eine Fehlermeldung ausgibt.

7. Verfahren nach einem der vorhergehenden Ansprüche,
wobei nach der fehlerhaften Editierung des Eingabefeldes (2) ein Verbleiben des Cursors (3) in dem Eingabefeld (2) zu einer Korrektur der fehlerhaften Editierung erzwungen wird.

8. Verfahren nach einem der vorhergehenden Ansprüche,
wobei das Computerprogramm als Entwicklungsumgebung insbesondere für Steuerungsaufgaben in der Automatisierungstechnik ausgeführt ist.

9. Computerprogrammprodukt zur Durchführung eines Verfahrens nach einem der Ansprüche 1 bis 8.

10. System (10) zur Bereitstellung von Benutzerinformationen mit
- einem Bildschirm (11) zur Darstellung innerhalb eines Computerprogramms von einem Anwender editierbarer Eingabefelder und
- einer Verarbeitungseinheit (12) zum Erkennen eines innerhalb eines Eingabefeldes (2) positionierten Cursors (3) und zum Erzeugen eines Bildschirmfensters (1) mit den Benutzerinformationen unmittelbar nach dem Erkennen des innerhalb des Eingabefeldes (2) positionierten Cursors (3),
wobei der Bildschirm (11) zum Anzeigen des Bildschirmfensters (1) vorgesehen ist.

11. System nach Anspruch 10,
wobei das Eingabefeld zur Belegung eines Parameters (4) mit einem Wert (5) vorgesehen ist und die Benutzerinformationen zur Information des Anwenders über einen Zweck und/oder einen gültigen Wertebereich (6) des Parameters (4) vorgesehen sind.

12. System nach Anspruch 10 oder 11,
wobei der Bildschirm (11) zur Darstellung eines Hyperlinks (7) innerhalb des Bildschirmfensters (1) vorgesehen ist, der dem Anwender weitere Benutzerinformationen zugänglich macht.

13. System nach einem der Ansprüche 10 bis 12,
wobei das System (10) derart ausgeführt ist, dass das Bildschirmfenster (1) opak dargestellt wird, wenn ein von dem Anwender steuerbarer Mauszeiger (8) innerhalb des Eingabefeldes (2) oder innerhalb eines Aktivierungsbereiches im Bildschirmfenster (1) positioniert ist, in dem mittels des Mauszeigers (8) eine durch das Bildschirmfenster (1) bereitgestellte Funktion, insbesondere der Hyperlink (7), aktivierbar ist.

14. System nach einem der Ansprüche 10 bis 13,
wobei das System (10) derart ausgeführt ist, dass das Bildschirmfenster (1) semitransparent dargestellt wird, wenn der Mauszeiger (8) außerhalb des Eingabefeldes (2) und außerhalb des Aktivierungsbereiches positioniert ist.

15. System nach einem der Ansprüche 10 bis 14,
wobei der Bildschirm (11) zur Anzeige eines weiteren Bildschirmfensters (9) während oder nach einer fehlerhaften Editierung des Eingabefeldes (2) vorgesehen ist, das eine Fehlermeldung ausgibt.

16. System nach einem der Ansprüche 10 bis 15,
wobei das System (10) derart ausgeführt ist, dass nach der fehlerhaften Editierung des Eingabefeldes (2) ein Verbleiben des Cursors (3) in dem Eingabefeld (2) zu einer Korrektur der fehlerhaften Editierung erzwungen wird.

17. System nach einem der Ansprüche 10 bis 16,
wobei das System als Entwicklungswerkzeug insbesondere für Steuerungsaufgaben in der Automatisierungstechnik ausgeführt ist.
